# EUROPÄISCHE PATENTSCHRIFT

(11) **EP 2 598 770 B1**
(45) Veröffentlichungstag und Bekanntmachung des Hinweises auf die Patenterteilung: **25.04.2018**
(21) Anmeldenummer: 11738712.6
(22) Anmeldetag: 29.07.2011
(51) Int. Cl.: F16F 7/10

(54) **SCHWINGUNGSABSORBER ZUR DÄMPFUNG MECHANISCHER SCHWINGUNGEN**
VIBRATION ABSORBER FOR DAMPING MECHANICAL VIBRATIONS
ABSORBEUR DE VIBRATIONS SERVANT À AMORTIR DES VIBRATIONS MÉCANIQUES

(30) Priorität: 30.07.2010 DE 102010038720
(43) Veröffentlichungstag der Anmeldung: 05.06.2013
(73) Patentinhaber: Veit, Günther, 55411 Bingen (DE)
(72) Erfinder: Veit, Günther, 55411 Bingen (DE)
(74) Vertreter: Isarpatent
(86) Internationale Anmeldenummer: PCT/EP2011/063087
(87) Internationale Veröffentlichungsnummer: WO 2012/013775

(56) Entgegenhaltungen:
- EP-A1- 1 783 366
- EP-A1- 1 852 630
- DE-A1-102006 031 830

## Beschreibung

Die vorliegende Erfindung betrifft einen Schwingungsabsorber zur Dämpfung mechanischer Schwingungen gemäß dem Oberbegriff des Anspruchs 1, wie aus der EP 1 852 630 A1 bekannt..

Obgleich die vorliegende Erfindung für die Dämpfung mechanischer Schwingungen an ganz unterschiedlichen, wenigstens abschnittsweise schwingfähigen Bauwerken anwendbar ist, wird die Erfindung nachstehend im Zusammenhang mit der Absorption von Körperschall, welcher sich innerhalb der tragenden Konstruktion eines Brückenbauwerks als mechanische Schwingung fortpflanzt, näher erläutert.

Innerhalb von Tragkonstruktionen wie zum Beispiel Stahlbrückenbauten für den Schienenverkehr kann es zur Anregung mechanischer Schwingungen und in der Folge zu einer niederfrequenten Schallabstrahlung durch den schwingenden Körper der Konstruktion kommen, welche in einem bestimmten Frequenzbereich auch als Dröhnen bezeichnet wird. Dieses Dröhnen wird vom Menschen jedoch oftmals als unangenehm und störend empfunden. Es wäre somit wünschenswert, eine derartige niederfrequente Schallabstrahlung ausgehend von Brückenbauwerken möglichst weitgehend zu dämpfen, gerade dann, wenn sich das Bauwerk in dicht besiedeltem Gebiet befindet.

Resonanzabsorber zur Reduktion von Schwingungen eines zu dämpfenden Körpers, welche nach dem Prinzip ein- oder beidseitig eingespannter stabförmiger Schwingelemente arbeiten, wurden zum Beispiel in der DE 21 63 798 C2 beschrieben. Um einen interessierenden Bereich zu dämpfender Frequenzen abzudecken, ist beispielsweise eine Anzahl paralleler, jeweils einseitig an einem Rahmen befestigter Stäbe mit unterschiedlichen Längen vorgesehen. Der Resonanzabsorber der DE 21 63 798 C2 wird über den Rahmen kraftschlüssig an dem zu dämpfenden Körper befestigt.

Die DE 43 43 008 C1 zeigt einen Resonanzabsorber zur Dämpfung von Körperschallschwingungen, bei dem freischwingende Doppelzungen vorgesehen sind, wobei zwischen den beiden Elementen der Zungen ein Dämpfungsbelag eingezwängt ist. Bei dem dort beschriebenen Resonanzabsorber sind eine Anzahl von Doppelzungen variierender Längen in mehreren Lagen parallel zueinander angeordnet, wobei die Lagen durch Distanzstücke voneinander getrennt sind und mit Hilfe von Spannschrauben auf einer Basisplatte zusammengehalten werden. Die in der DE 43 43 008 C1 beschriebenen Dämpfungselemente in Form von Doppelzungen sind jedoch lediglich dazu in der Lage, Schwingungen in einer einzigen Wirkungsrichtung, nämlich normal zu der Ebene, in welcher sich die Zungen und der Dämpfungsbelag erstrecken, wirksam zu absorbieren.

Bei den bereits angesprochenen Brückenbauwerken kann es jedoch erforderlich sein, auch in mehreren Raumrichtungen auftretende mechanische Schwingungen zu absorbieren bzw. zu dämpfen. Ferner sollten zur Dämpfung der Schwingungen eingesetzte Absorber für eine wirksame Schwingungsabsorption an Stellen des Bauwerks mit hoher Schwingdynamik angebracht werden. Hierbei ist aus Gründen der Sicherheit auch eine Beeinträchtigung der Funktion der tragenden Konstruktion des Bauwerks, insbesondere eine Schwächung deren mechanischer Belastbarkeit durch Maßnahmen zur Befestigung der Absorber, zu vermeiden. Ferner muss das durch den oder die Schwingungsabsorber dem Bauwerk hinzugefügte Gewicht unter der maximal zulässigen statischen Zusatzlast liegen, und die Schwingungsabsorber sollen zudem auf dem zur Verfügung stehenden Bauraum untergebracht werden können, ohne dass Inspektions- und Wartungsarbeiten an dem Bauwerk behindert werden.

DE102006031830 A1 offenbart eine luftgekühlte Anlage mit auf einem tragenden Stützgerüst angeordneten Wärmetauscherelementen, wobei das Stützgerüst mehrere vertikale Stützen und benachbarte Stützen miteinander verbindende Koppelstäbe umfasst, wobei ein Koppelstab unter Eingliederung einer elastomeren Dämpfungslage mit der Stütze verbunden ist.

Mit den Absorbern gemäß dem vorstehend dargelegten Stand der Technik ist eine Schwingungsdämpfung unter Beachtung der vorgenannten Anforderungen oftmals nur schwierig oder mit großem Aufwand zu erreichen.

Der vorliegenden Erfindung liegt somit die Aufgabe zu Grunde, einen Schwingungsabsorber bereitzustellen, welcher eine wirkungsvolle Absorption von Schwingungen entlang mehrerer Raumrichtungen ermöglicht und die Sicherheit und Wartbarkeit des Bauwerks nicht beeinträchtigt.

Diese Aufgabe wird durch einen Schwingungsabsorber mit den Merkmalen des Patentanspruchs 1 gelöst.

Die Idee der vorliegenden Erfindung liegt darin, die mechanischen Schwingungen des zu dämpfenden Bauwerks zunächst zumindest in die erste Trageplatte der Trageanordnung einzuleiten. Hierzu ist die Befestigungseinrichtung in geeigneter Weise ausgebildet. Von der ersten Trageplatte können die mechanischen Schwingungen in die zweite Trageplatte übertragen werden. Durch das Koppeln des ersten Schwingelements mit der ersten Trageplatte und das Koppeln des zweiten Schwingelements mit der zu der ersten Trageplatte nichtparallelen, somit geneigt zu dieser angeordneten, zweiten Trageplatte wird ein Absorbieren von Schwingungen entlang zweier nichtparalleler Raumrichtungen und insbesondere entlang zweier zueinander orthogonaler Raumrichtung ermöglicht. Die mit den beiden verbundenen Trageplatten gebildete Trageanordnung ermöglicht es vorteilhaft, den Schwingungsabsorber bei geringem Bauraumbedarf an einer für die Schwingungsdämpfung günstig gewählten Stelle des Bauwerks zu befestigen. Zugleich kann auf diese Weise dadurch, dass anstelle getrennter Basisplatten eine Trageanordnung an dem Bauwerk befestigt wird, eine Beeinträchtigung der Belastbarkeit des Bauwerks durch die Befestigungsmaßnahmen vermieden oder auf ein geringes Maß vermindert werden. Montage und Demontage des Schwingungsabsorbers werden überdies vereinfacht.

Weitere vorteilhafte Ausgestaltungen und Weiterbildungen der Erfindung ergeben sich aus den weiteren Unteransprüchen in Zusammenschau mit den Figuren der Zeichnung.

Bei einer Ausgestaltung des erfindungsgemäßen Schwingungsabsorbers sind die erste und die zweite Trageplatte im Wesentli chen senkrecht zueinander angeordnet. Hierdurch gelingt es auf besonders günstige Weise, in die erste Trageplatte eingeleitete Schwingungen des wenigstens abschnittsweise schwingfähigen Bauwerks längs zweier orthogonal zueinander verlaufender Raumrichtungen wirksam zu absorbieren.

Gemäß einer Weiterbildung weist die Trageanordnung eine dritte Trageplatte auf, welche mit der ersten Trageplatte derart verbunden ist, dass die mechanischen Schwingungen von der ersten Trageplatte auch auf die dritte Trageplatte übertragbar sind. Hierbei ist ein drittes Schwingelement an einer dritten Position entlang der Längsachse des dritten Schwingelements für eine Übertragung der mechanischen Schwingungen von der dritten Trageplatte auf das dritte Schwingelement gekoppelt. Dies ermöglicht es, die Anzahl der vorhandenen Schwingelemente zur Dämpfung der Schwingungen des Bauwerkes zu vergrößern und somit durch eine Steigerung des Energieentzugs durch die Schwingelemente eine noch wirksamere Schwingungsabsorption zu erreichen.

In einer Ausgestaltung sind die erste und die dritte Trageplatte im Wesentlichen senkrecht zueinander angeordnet. Das erste Schwingelement und das dritte Schwingelement können dadurch ebenfalls in besonders wirksamer Weise mechanische Schwingungen längs zweier senkrecht zueinander verlaufender Raumrichtungen absorbieren.

Bei einer weiteren Ausgestaltung des erfindungsgemäßen Schwingungsabsorbers sind die erste Trageplatte, die zweite und die dritte Trageplatte zueinander in U-Form angeordnet. Hierbei stehen die zweite und dritte Trageplatte von der ersten Trageplatte zu der gleichen Seite ab. Eine zweidimensionale Schwingungsdämpfung wird durch diese Maßnahme in ganz besonders platzsparender Weise erreicht und ein an dem Bauwerk einfach zu montierender Schwingungsabsorber wird erzielt.

In einer weiteren Ausgestaltung sind die zweite Trageplatte und die dritte Trageplatte miteinander im Bereich einer offenen Seite der U-Form über eine Verbindungsplatte verbunden. Dadurch können die zweite und die dritte Trageplatte gemeinsam transportiert und gehandhabt werden. Ferner wird eine belastbare, steife Verbindung der ersten, zweiten und dritten Traegplatten erzielt.

Erfindungsgemäß ist die Kopplung der Schwingelemente mit den Trageplatten jeweils als eine kraft- und momentenschlüssige Schraubverbindung ausgebildet. Die Schraubverbindung erfolgt insbesondere jeweils mittels zweier Schrauben. Die Verwendung einer kraft- und momentenschlüssigen Schraubverbindung ermöglicht einerseits eine einfache und sichere Montage sowie eine gute Austauschbarkeit einzelner Schwingelemente, und bewirkt andererseits berechenbare Anpresskräfte und eine zuverlässige und verlustarme Übertragung der mechanischen Schwingungen von den Trageplatten auf die mit den Trageplatten jeweils gekoppelten Schwingelemente.

Bei einer noch weiteren Ausgestaltung sind Sicherungsscheiben vorgesehen, welche ein ungewolltes selbständiges Lösen der Schraubverbindungen, mittels der die Schwingelemente mit den Trageplatten gekoppelt sind, verhindern.

Bei einer vorteilhaften Ausgestaltung sind die Schwingelemente in Bezug auf die Trageplatten derart angeordnet, dass eine Hauptwirkungsrichtung jedes der Schwingelemente jeweils im Wesentlichen senkrecht zu der Trageplatte, mit welcher dieses Schwingelement gekoppelt ist, verläuft. Dadurch kann jedes der Schwingelemente mechanische Schwingungen in einer Richtung senkrecht zu der Trageplatte, mit welcher das jeweilige Schwingelement gekoppelt ist, dämpfen. Damit wird eine noch wirkungsvollere Dämpfung zweidimensionaler Schwingungen erreicht. Zugleich können bei dieser Ausgestaltung die Schwingelemente mit der jeweils zugeordneten Trageplatte in gleicher Weise gekoppelt werden, wodurch sich der Aufwand bei der Fertigung und Montage vorteilhaft verringert.

Bei einer weiteren Ausgestaltung ist die Position der Kopplung der Schwingelemente mit den Trageplatten jeweils derart gewählt, dass jedes Schwingelement zwei frei schwingende, einseitig eingespannte Balkenelemente bildet. Jedes der Schwingelemente bildet somit zwei balkenförmige λ/4 - Absorberelemente, welche dem schwingfähigen System bei Auslenkung ihres Einspannortes durch Verbiegung aus ihrer Ruhelage heraus Energie entziehen und somit eine Schwingungsdämpfung bewirken können.

Bei einer anderen Ausgestaltung sind mehrere Schwingelemente mit zumindest einer der Trageplatten gekoppelt. Das Vorsehen mehrerer Schwingelemente an wenigstens einer der Trageplatten ermöglicht es bei geeigneter Abstimmung der Längen der einzelnen Schwingelemente, Schwingungen entlang der Hauptwirkungsrichtung der mit der zumindest einen der Trageplatten gekoppelten Schwingelemente über einen breiteren Frequenzbereich zu dämpfen und/oder durch die größere Anzahl von Schwingelementen dem schwingfähigen System eine größere Menge kinetischer Energie zu entziehen.

Bei einer Ausgestaltung sind die mehreren Schwingelemente auf der zumindest einen der Trageplatten nebeneinander angeordnet. Hierbei sind insbesondere die Hauptwirkungsrichtungen der mehreren Schwingelemente parallel zueinander ausgerichtet. Dadurch kann ein ungestörtes freies Schwingen der Schwingelemente bei zugleich platzsparender Anordnung dieser ermöglicht werden, ohne dass einzelne Schwingelemente miteinander kollidieren.

Bei einer anderen Ausgestaltung sind die mehreren Schwingelemente entlang einer Richtung senkrecht zu der zumindest einen Trageplatte in mehreren Schichten übereinander angeordnet. Zusätzlich stehen die Schwingelemente mit zwischen den Schwingelementen angeordneten Distanzplatten in Berührung. Hierdurch wird der Platzbedarf für die gesamte Anordnung erheblich verringert, wobei durch die Distanzstücke gewährleistet wird, dass ein freies Schwingen der Schwingelemente ohne Kollisionsgefahr trotz der geschichteten Anordnung möglich bleibt.

Gemäß einer Weiterbildung des erfindungsgemäßen Schwingungsabsorbers sind die Schwingelemente jeweils mit zwei im Wesentlichen parallel zueinander angeordneten Zungen gleicher Abmessungen gebildet. Hierbei ist zwischen den Zungen eine Schicht eines Dämpfungsmaterials, insbesondere eines dauerelastischen Werkstoffes, angeordnet. Der durch die Schwingelemente bewirkte Energieentzug wird durch die Schicht des Dämpfungsmaterials gesteigert und dadurch die Dämpfungswirkung des Schwingungsabsorbers verbessert.

Gemäß einer Ausgestaltung sind die Schwingelemente dafür ausgebildet, dem wenigstens abschnittsweise schwingfähigen Bauwerk kinetische Energie niederfrequenter Schwingungen, insbesondere in einem Frequenzbereich von 10 Hz bis 200 Hz, zu entziehen.

Bei einer anderen Weiterbildung sind die Zungen der Schwingelemente aus einem metallischen Werkstoff gefertigt.

In einer Ausgestaltung ist ein gegen Ozon und gegen UV-Strahlung beständiges Dämpfungsmaterial vorgesehen. Dadurch wird eine hohe Lebensdauer des Schwingungsabsorbers gerade auch bei einem Einsatz im Freien erreicht.

Bei einer weiteren Ausgestaltung ist das Dämpfungsmaterial gegenüber Temperaturen in einem Bereich von - 20°C bis + 80°C beständig. Auch hierdurch wird die Lebensdauer des Schwingungsabsorbers weiter verbessert, insbesondere bei einem Einsatz des Schwingungsabsorbers an Bauwerken, welche sich unter dem Einfluss der Sonneneinstrahlung stark erwärmen können.

Bei einer Weiterbildung des erfindungsgemäßen Schwingungsabsorbers umfasst die Befestigungseinrichtung eine an der ersten Trageplatte vorgesehene erste ebene Anlagefläche sowie ein oder mehrere Bohrungen in einem Endabschnitt oder mehreren Endabschnitten der ersten Trageplatte. Hierbei sind die Bohrungen zum Aufnehmen von Befestigungsschrauben für ein kraft- und momentenschlüssiges Befestigen der Trageanordnung durch ein Anliegen der ersten ebenen Anlagefläche an dem Bauwerk ausgebildet. Eine ebene Anlagefläche ermöglicht vorteilhaft ein ganzflächiges Aufliegen an einem zugeordneten Abschnitt des Bauwerkes. Die Verwendung von Befestigungsschrauben für ein kraft- und momentenschlüssiges Befestigen der Trageanordnung an dem Bauwerk ermöglicht eine einfache Montage und Demontage des Schwingungsabsorbers an dem Bauwerk. Ferner können die für eine zuverlässige Übertragung der Schwingungen von dem Bauwerk auf die erste Trageplatte angestrebten Anpresskräfte der ersten ebenen Anlagefläche an das Bauwerk durch Anziehen der Befestigungsschrauben mit einem vorbestimmten Drehmoment bewirkt werden. Die Sicherung der Schrauben gegen unbeabsichtigtes selbsttätiges Lösen kann bei dieser Ausgestaltung, wenn erforderlich, auf einfache Weise durch geeignete Sicherungsscheiben erfolgen.

Bei einer weiteren Ausgestaltung umfasst die Befestigungseinrichtung eine an der zweiten Trageplatte vorgesehene zweite ebene Anlagefläche. Die zweite ebene Anlagefläche ist ebenfalls für ein Anliegen an dem Bauwerk vorgesehen. Dadurch wird die gesamte Fläche, auf welcher die Trageanordnung an dem wenigstens abschnittsweise schwingfähigen Bauwerk anliegt, gesteigert und die Wirksamkeit der Übertragung der Schwingungen von dem Bauwerk auf die Trageplatten der Trageanordnung noch weiter verbessert.

Bei einer vorteilhaften Ausgestaltung weist die Befestigungseinrichtung eine Zugstange sowie ein Klammerelement auf. Hierbei ist das Klammerelement zum zumindest teilweisen Hintergreifen eines Abschnitts des Bauwerks ausgebildet. Ferner ist bei dieser Ausgestaltung die Zugstange mit der zweiten Trageplatte und dem Klammerelement derart koppelbar, dass eine Zugkraft auf die Zugstange aufbringbar und die Trageanordnung hierdurch gegen den Abschnitt des Bauwerks klemmbar ist. Durch ein Klemmen der Trageanordnung gegen einen Abschnitt des Bauwerks kann auf das Einbringen von Befestigungsbohrungen oder Befestigungs-Gewindebohrungen in das Bauwerk zumindest teilweise verzichtet werden. Dies ist insbesondere dann vorteilhaft, wenn der Schwingungsabsorber an dem Bauwerk für eine optimale Schwingungsabsorption an einer Stelle befestigt werden soll, an der das Einbringen von Bohrungen aus Gründen der mechanischen Belastbarkeit des Bauwerks an dieser Stelle nicht zulässig ist oder die Anzahl der eingebrachten Befestigungsbohrungen aus diesem Grund möglichst gering gehalten werden soll.

Bei einer Ausgestaltung verläuft eine Längsachse der Zugstange im Wesentlichen senkrecht zu der ersten Trageplatte. Dies ermöglicht es vorteilhaft, eine besonders große Anpresskraft der ersten Trageplatte auf das Bauwerk zu erzielen.

Gemäß einer Weiterbildung sind die Trageplatten aus Metall gefertigt. Eine haltbare und steife Trageanordnung kann dadurch geschaffen werden.

Gemäß einer weiteren Weiterbildung sind die Trageplatten miteinander einstückig ausgebildet. Hierdurch kann eine besondere gute Übertragung mechanischer Schwingungen zwischen den Trageplatten erreicht werden.

Gemäß einer noch weiteren Weiterbildung sind die mit einem Metall gebildeten Bauelemente des Schwingungsabsorbers galvanisch beschichtet. Hierdurch wird die Beständigkeit dieser Bauelemente gegen Umwelteinflüsse, insbesondere gegen Korrosion, erheblich verbessert.

In einer Ausgestaltung des erfindungsgemäßen Schwingungsabsorbers ist ein Fangkorb vorgesehen, welcher sämtliche Schwingelemente des Schwingungsabsorbers derart umgibt, dass bei einem Versagen der Kopplung eines der Schwingelemente mit der zugeordneten Trageplatte, beispielsweise durch Bruch einer Befestigungsschraube, das betroffene Schwingelement innerhalb des Fangkorbs aufgefangen wird. Auf diese Weise kann es insbesondere bei einem Einsatz des Schwingungsabsorbers an einem Brückenbauwerk vermieden werden, dass bei einem Versagen der Kopplung des Schwingelements mit der zugeordneten Trageplatte das Schwingelement sich von dem Brückenbauwerk löst und auf darunter befindliche Gegenstände, Fahrzeuge oder Personen stürzt.

Bei einer anderen Ausgestaltung ist ein Fangseil vorgesehen, welches mit dem Bauwerk und der Trageanordnung verbunden ist. Auf diese Weise kann der Schwingungsabsorber bei einem - wenn gleich sehr unwahrscheinlichen - Versagen der Befestigungseinrichtung mittels des Fangseils aufgefangen und ein Absturz des gesamten Schwingungsabsorbers vermieden werden.

Die vorliegende Erfindung wird im Folgenden anhand von Ausführungsbeispielen unter Bezugnahme auf die beiliegenden Figuren der Zeichnung näher erläutert.

Von den Figuren zeigen:
- Figur 1: eine Darstellung eines Schwingungsabsorbers gemäß einem ersten Ausführungsbeispiel der Erfindung in einem Querschnitt;
- Figur 2: eine Draufsicht auf den Schwingungsabsorber gemäß der Figur 1;
- Figur 3: eine Draufsicht auf einen Schwingungsabsorber gemäß einem zweiten Ausführungsbeispiel der Erfindung;
- Figur 4: eine Seitenansicht des Schwingungsabsorbers gemäß der Figur 3, in Richtung A-A betrachtet;
- Figur 5: eine Stirnansicht des Schwingungsabsorbers gemäß der Figur 3, in Richtung B-B betrachtet;
- Figur 6: eine perspektivische Unteransicht des Schwingungsabsorbers gemäß der Figur 3;
- Figur 7: eine perspektivische Draufsicht auf den Schwingungsabsorber gemäß der Figur 3, zusammen mit einem Fangkorb;
- Figur 8: ein Beispiel einer Tragkonstruktion eines Bauwerks, an welchem der Schwingungsabsorber gemäß dem ersten, zweiten oder dritten Ausführungsbeispiel zur Dämpfung mechanischer Schwingungen zur Anwendung kommen kann; und
- Figur 9: eine schematische Darstellung eine Stirnansicht eines Schwingungsabsorbers gemäß einem dritten Ausführungsbeispiel der Erfindung.

In den Figuren der Zeichnung bezeichnen dieselben Bezugszeichen gleiche oder funktionsgleiche Elemente und Merkmale, soweit nichts Gegenteiliges angegeben ist.

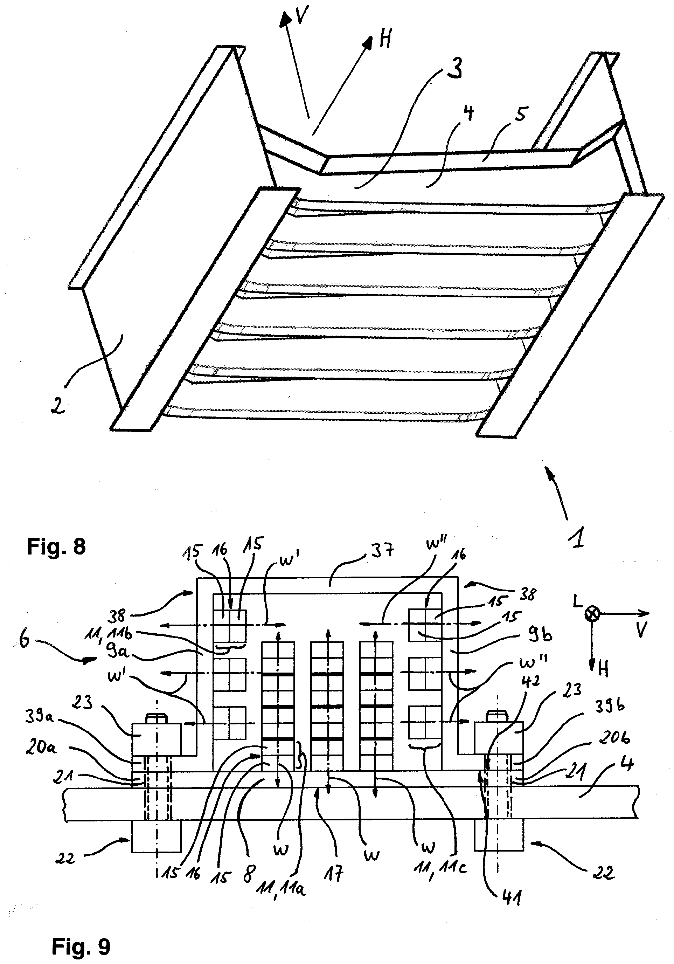

In Figur 8 ist ein Teil einer Tragkonstruktion eines wenigstens abschnittsweise schwingfähigen Bauwerks 1 vereinfacht in perspektivischer Ansicht dargestellt. Hierbei handelt es sich beispielhaft um einen Abschnitt einer Unterkonstruktion einer Eisenbahnbrücke. Aus Figur 8 wird ersichtlich, dass das Bauwerk 1 im Wesentlichen parallel verlaufende Längsträger 2 sowie zwischen den Längsträgern 2 angeordnete und mit diesen verbundene Querträger 3 mit jeweils einem Steg 4 und einem Flansch 5 aufweist. Um eine von der Eisenbahnbrücke 1 ausgehende niederfrequente Schallabstrahlung zu vermindern, mit anderen Worten, um das Bauwerk 1 zu "entdröhnen", wird zunächst eine Schwingungsmessung an dem Bauwerk 1 durchgeführt. Die über einen bestimmten Zeitraum, beispielsweise einen Zeitraum von zwei bis drei Tagen, gewonnenen Messergebnisse werden sodann ausgewertet. Insbesondere wird hierbei ermittelt, in welchen Raumrichtungen das Bauwerk 1 mechanisch schwingt, und entlang welcher Raumrichtungen daher eine Schwingungsdämpfung erfolgen soll und welche Frequenzbereiche bevorzugt gedämpft werden sollen. Beispielsweise kann sich eine Schwingungsdämpfung für Schwingungen entlang einer horizontalen Richtung H und einer vertikalen Richtung V, wie in Figur 8 angedeutet, für erforderlich erweisen.

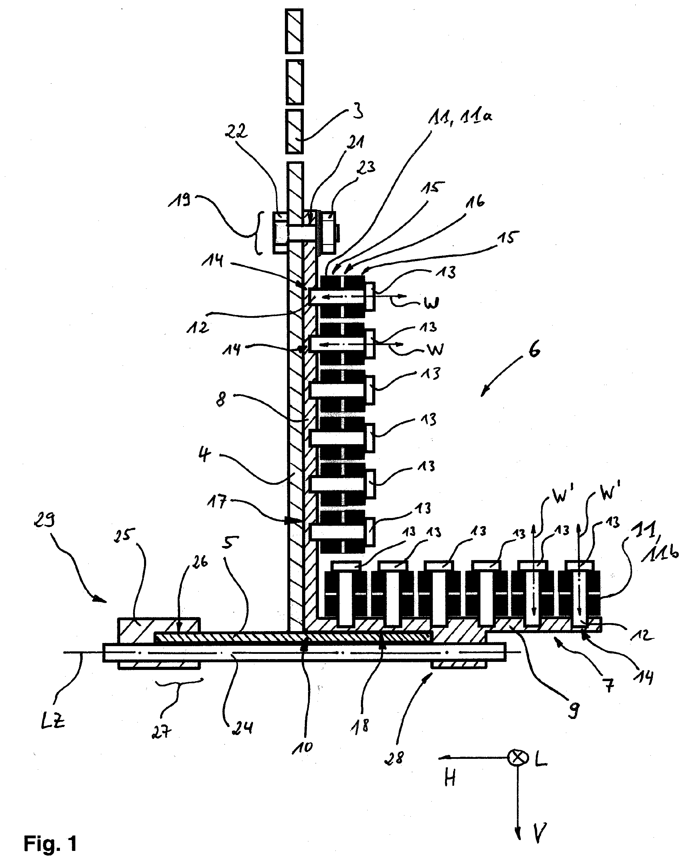

Figur 1 zeigt den Querträger 3 des Bauwerks 1 in einer Schnittdarstellung, sowie einen Schwingungsabsorber 6 gemäß einem ersten Ausführungsbeispiel der Erfindung. Der Querträger 3 umfasst einen vertikal verlaufenden Steg 4 und einen horizontal verlaufenden Flansch 5. Der Schwingungsabsorber 6 gemäß dem ersten Ausführungsbeispiel weist eine Trageanordnung 7 auf, welche ihrerseits zwei Trageplatten 8 und 9 aufweist. Die erste Trageplatte 8 und die zweite Trageplatte 9 sind im Wesentlichen senkrecht zueinander angeordnet und in einem Eckbereich 10 miteinander bevorzugt einstückig verbunden. In dem in Figur 1 gezeigten Zustand, in welchem der Schwingungsabsorber 6 bereits an dem Querträger 3 montiert ist, verläuft die erste Trageplatte 8 in vertikaler Richtung, im Wesentlichen parallel zu dem Steg 4 des Querträgers 3, während die zweite Trageplatte 9 parallel zu dem Flansch 5 des Querträgers 3 verläuft.

Der Schwingungsabsorber 6 weist ferner eine Anzahl von stabförmigen Schwingelementen 11 auf, wobei auf jeder der Trageplatten 8, 9 mehrere Schwingelemente 11 angeordnet sind. Mit anderen Worten, bei dem Schwingungsabsorber 6 der Figur 1 sind mehrere erste Schwingelemente 11a mit der ersten Trageplatte 8 gekoppelt, während mehrere zweite Schwingelemente 11b mit der zweiten Trageplatte 9 gekoppelt sind. Stellvertretend sind in Figur 1 nur zwei Schwingelemente mit Bezugszeichen versehen. Die Schwingelemente 11 sind in der Darstellung der Figur 1 ebenfalls im Querschnitt gezeigt. Die Längsachsen L der Schwingelemente 11 verlaufen im Wesentlichen parallel und erstrecken sich in die Bildebene hinein. Die Schwingelemente 11 sind mit den ersten und zweiten Trageplatten 8, 9 jeweils mittels einer Schraubverbindung 12 kraft- und momentenschlüssig gekoppelt. Wie Figur 1 schematisch zeigt ist jedes der Schwingelemente 11 mit einer im Querschnitt etwa mittig angeordneten Bohrung versehen, durch welche jeweils eine Gewindeschraube 13, zum Beispiel mit Sechskantkopf, geführt ist. Die Schraube 13 steht jeweils mit einer zugeordneten Gewindebohrung 14 in der ersten Trageplatte 8 oder der zweiten Trageplatte 9 in Eingriff. Durch ein Anziehen der Schraube 13 mit einem bestimmten, geeignet gewählten Drehmoment wird eine kraft- und momentenschlüssige Kopplung der Schwingelemente 11 mit den Trageplatten 8, 9 erzielt. Die ersten Schwingelemente 11a werden mit einer für eine zuverlässige Übertragung von Schwingungen hinreichenden Anpresskraft auf die erste Trageplatte 8 gepresst. Gleichermaßen werden die zweiten Schwingelemente 11b ebenfalls mit einer ausreichenden Anpresskraft auf die zweite Trageplatte 9 gedrückt.

Wie der Figur 1 weiterhin zu entnehmen ist, sind mehrere Schwingelemente 11a mit der ersten Trageplatte 8 derart gekoppelt, dass die Hauptwirkungsrichtungen W der mit der ersten Trageplatte 8 gekoppelten Schwingelemente 11a im Wesentlichen parallel zueinander verlaufen und sowohl zu der ersten Trageplatte 8 als auch zu dem Steg 4 des Querträger 3 im Wesentlichen senkrecht ausgerichtet sind. Demgegenüber sind mit der zweiten Trageplatte 9 ebenfalls mehrere Schwingelemente 11b gekoppelt, wobei die Hauptwirkungsrichtungen W' der mit der zweiten Trageplatte 9 gekoppelten Schwingelemente 11b wiederum im Wesentlichen zueinander parallel verlaufen. Die Hauptwirkungsrichtungen W' der mit der zweiten Trageplatte 9 gekoppelten Schwingelemente 11b sind jedoch senkrecht zu der zweiten Trageplatte 9 und auch im Wesentlichen senkrecht zu dem Flansch 5 des Querträgers 3 ausgerichtet.

Jedes der in Figur 1 gezeigten Schwingelemente 11, von denen zur besseren Übersicht nur zwei mit einem Bezugszeichen versehen sind, ist mit zwei im Wesentlichen parallel zueinander angeordneten und sich parallel zu der in die Bildebene hinein verlaufenden Längsachse L der Schwingelemente 11 erstreckenden Zungen 15 gebildet. Die Zungen 15 weisen im Wesentlichen gleiche Abmessungen auf und sind insbesondere von gleicher Dicke. Zwischen den Zungen 15 ist eine Schicht 16 eines Dämpfungsmaterials, insbesondere eines dauerelastischen Werkstoffes, angeordnet. Bevorzugt sind die Zungen 15 mit der Schicht 16 derart verklebt, dass bei einem Verbiegen der Schwingelemente 11, 11a, 11b durch Auslenken der freien Enden dieser in Richtung ihrer Hauptwirkungsrichtung W beziehungsweise W' das Dämpfungsmaterial der Schicht 16 einer Scherbelastung ausgesetzt wird. Hierbei führen innere Reibvorgänge in der Schicht 16 zu einem gesteigerten Energieentzug.

Darüber hinaus zeigt die Figur 1, dass an der ersten Trageplatte 8 eine erste ebene Anlagefläche 17 vorgesehen ist, welche in dem dargestellten montierten Zustand an dem Steg 4 des Querträgers 3 im Wesentlichen vollflächig anliegt. Ferner weist die zweite Trageplatte 9 eine zweite ebene Anlagefläche 18 auf, welche, wie Figur 1 ebenfalls zeigt, für ein Anliegen an der Oberseite des Flansches 5 des Querträgers 3 des Bauwerks 1 vorgesehen ist. In einem Endabschnitt 19 der ersten Trageplatte 8 ist eine Bohrung 21 vorgesehen, durch welche der Schaft einer Befestigungsschraube 22 geführt ist. In dem in Figur 1 gezeigten Beispiel ist die Befestigungsschraube 22 beispielhaft als Sechskant-Gewindeschraube ausgebildet. In den Steg 4 des Querträgers 3 ist ebenfalls eine Bohrung eingebracht, welche zu der Bohrung 21 in dem Endabschnitt 19 der ersten Trageplatte 8 konzentrisch angeordnet ist. Mittels der Befestigungsschraube 22 und einer zugeordneten Befestigungsmutter 23 wird in dem gezeigten Beispiel durch Aufbringen eines hierzu ausreichenden, vorbestimmten Drehmoments auf die Schraube 22 und die Mutter 23 eine kraft- und momentenschlüssige Verbindung der Trageanordnung 7 mit dem Bauwerk 1 durch ein Anliegen der ersten ebenen Anlagefläche 17 an dem Steg 4 gewährleistet. Zusätzlich ist bei dem in Figur 1 gezeigten Schwingungsabsorber 6 eine Zugstange 24 vorgesehen, welche, wie aus Figur 1 ersichtlich ist, unterhalb des Flansches 5 und im Wesentlichen parallel zu dessen Unterseite verläuft. Ferner ist ein Klammerelement 25 vorgesehen, welches eine Nut 26 aufweist. Die Nut 26 ermöglicht ein teilweises Hintergreifen eines Abschnitts 27 des Bauwerkes, hier eines Abschnitts 27 des Endes des Flansches 5 des Querträgers 3. An der zweiten Trageplatte 9 ist ein Vorsprung 28 ausgebildet. Die Zugstange 24 ist mit dem Vorsprung 28 und dem Klammerelement 25 derart koppelbar, dass auf die Zugstange 24 eine Zugkraft aufgebracht werden kann. Beispielsweise kann der Vorsprung 28 hierfür mit einer geeigneten Gewindebohrung versehen sein. Ferner kann das Klammerelement 25 mit einer Durchgangsbohrung versehen sein, um es mittels der Zugstange 24 und einer auf die beispielsweise als Gewindestange ausgebildete Zugstange 24 aufschraubbaren Mutter (nicht dargestellt) gegen den Abschnitt 27 des Flansches 5 zu ziehen. Mit anderen Worten kann das Klammerelement 25 mittels der Zugstange 24 gegen eines der Enden des Flansches 5 gespannt werden, während die auf der in Bezug auf den Steg 4 gegenüberliegenden Seite des Querträgers 3 befindliche Trageanordnung 7 mit der ersten ebenen Anlagefläche 17 gegen den Steg 4 und mit der zweiten ebenen Anlagefläche 18 gegen die Oberseite des Flansches 5 gepresst wird. Bei dem in Figur 1 gezeigten Ausführungsbeispiel ersetzen das Klammerelement 25, die Zugstange 24 und der Vorsprung 28 in ihrem Zusammenwirken einen Teil der ansonsten erforderlichen Befestigungsbohrungen in dem Querträger 3. Hierdurch kann eine Schwächung des Querträgers 3 und damit eine Verringerung seiner mechanischen Belastbarkeit durch das Einbringen von Befestigungsbohrungen vorteilhaft auf ein geringes Maß begrenzt werden. Die Zugstange 24, das Klammerelement 25, der Vorsprung 28, die erste ebene Anlagefläche 17, die Bohrung 21 und die zweite ebene Anlagefläche 18 bilden Elemente einer Befestigungseinrichtung 29 für eine Befestigung des Schwingungsabsorbers 6 an dem Bauwerk 1. Mittels der Befestigungseinrichtung 29 ist der Schwingungsabsorber 6 an dem Bauwerk 1, bei dem gezeigten Beispiel an dem Querträger 3 des Bauwerks 1, derart befestigbar, dass mechanische Schwingungen des Bauwerks 1 in die erste Trageplatte 8 und insbesondere auch in die zweite Trageplatte 9 eingeleitet werden können. Vorteilhaft verläuft eine Längsachse LZ der Zugstange 24 im Wesentlichen senkrecht zu der ersten Trageplatte 8.

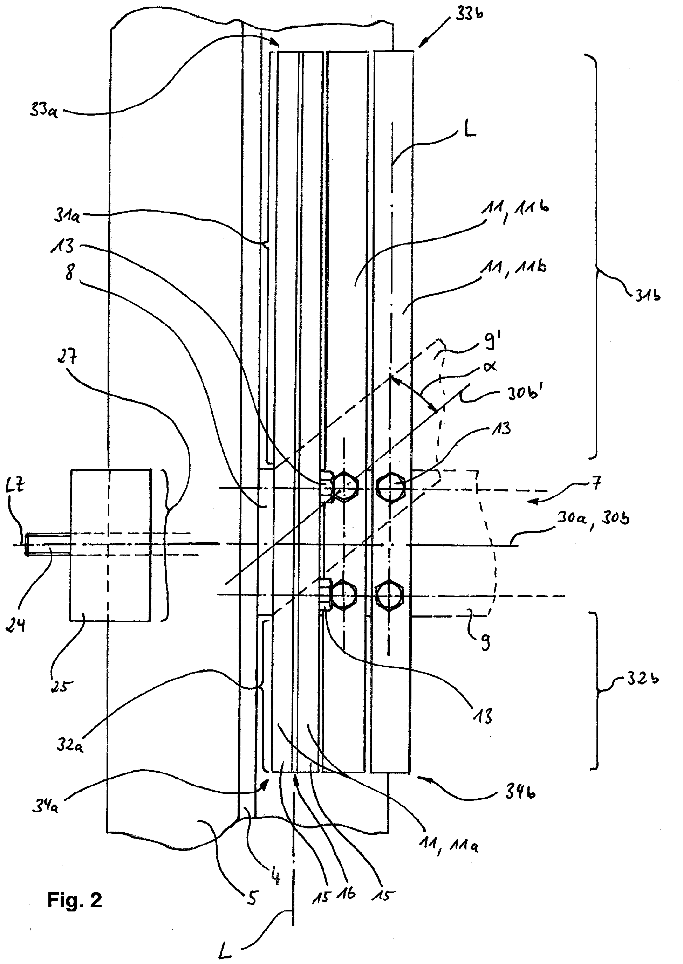

Figur 2 zeigt eine Draufsicht auf den Schwingungsabsorber 6 gemäß dem ersten Ausführungsbeispiel, wie er in Figur 1 dargestellt ist, und auf einen Abschnitt des Querträgers 3 des Bauwerks 1. In Figur 2 sind nicht alle Schwingelemente 11 des Schwingungsabsorbers 6 der Figur 1 gezeigt. Auch Figur 2 verdeutlicht jedoch, dass die Schwingelemente 11 jeweils eine Längsrichtung L aufweisen, wobei die Längsrichtungen L der Schwingelemente 11 im Wesentlichen parallel zueinander ausgerichtet sind. Wie Figur 2 weiterhin zeigt, ist ein erstes Schwingelement 11a an einer ersten Position 30a entlang der Längsachse L des ersten Schwingelements 11a mit der ersten Trageplatte 8 gekoppelt. Diese Kopplung erfolgt derart, dass eine Übertragung mechanischer Schwingungen von der ersten Trageplatte 8 auf das erste Schwingelement 11a ermöglicht wird. Wie bereits im Bezug auf Figur 1 dargelegt, sind bei dem gezeigten Auführungsbeispiel Schrauben 13 zur Herstellung einer kraft- und momentenschlüssigen Schraubverbindung 12 zwischen dem ersten Schwingelement 11a und der ersten Trageplatte 8 vorgesehen. Wie Figur 2 zeigt, erfolgt die Kopplung des ersten Schwingelementes 11a mit der ersten Trageplatte 8 mittels zweier Schrauben 13, welche beidseits der ersten Position 30a angeordnet sind. Gleichermaßen ist ein zweites Schwingelement 11b an einer zweiten Position 30b entlang der Längsachse L des zweiten Schwingelements 11b, welche jedoch bei dem gezeigten ersten Ausführungsbeispiel mit der ersten Position 30a zusamnmenfällt, mit der zweiten Trageplatte 9 zur Übertragung mechanischer Schwingungen von der zweiten Trageplatte 9 auf das zweite Schwingelement 11b gekoppelt. Auch diese Kopplung erfolgt mittels zweier Schrauben 13, welche symmetrisch und beidseits zu der zweiten Position 30b entlang der Längsachse L angeordnet sind.

Wie der Zusammenschau der Figuren 1 und 2 zu entnehmen ist, besitzt die Trageanordnung 7 des Schwingungsabsorbers 6 gemäß dem ersten Ausführungsbeispiel im Wesentlichen die Form eines L, welches aus den beiden Trageplatten 8 und 9 gebildet ist. In Figur 2 ist der weitere Verlauf der zweiten Trageplatte 9 in gestrichelten Linien angedeutet. In einer Variante des ersten Ausführungsbeispiels kann die zweite Trageplatte 9 sich auch in einer Richtung mit einem Winkel α von weniger als 90° zu der Längsachse L der zweiten Schwingelemente 11b geneigt erstrecken. Der Umriss der zweiten Trageplatte ist für diese Variante des ersten Ausführungsbeispiels des Schwingungsabsorbers 6 mit dem Bezugszeichen 9' bezeichnet.

Figur 2 zeigt ferner, dass die Schwingelemente 11 aufgrund der Wahl der ersten Position 30a und der zweiten Position 30b jeweils zwei frei schwingende, einseitig eingespannte Balkenelemente 31a, 32a beziehungsweise 31b, 32b bilden. Die Balkenelemente 31a, 31b, 32a, 32b sind hierbei jeweils im Bereich der benachbarten Schraube 13 fest eingespannt und können im Bereich der freien Enden 33a, 33b, 34a, 34b frei schwingen. Bei dem gezeigten Ausführungsbeispiel unterscheiden sich die Längen der Balkenelemente 31a und 32a bzw. 31b und 32b. Wie in Figur 2 angedeutet, können die Längen der Balkenelemente 31a, 31b, 32a, 32b benachbarter Schwingelemente 11 gleich sein, aber auch, etwa bei der Variante 9' der zweiten Trageplatte, durch eine veränderliche Position 30b' und damit eine veränderliche Position der Schrauben 13 von Schwingelement zu Schwingelement variieren. Frei schwingende Balkenelemente 31a, 31b, 32a, 32b unterschiedlicher Längen ermöglichen bei geeigneter Wahl dieser Längen im Zusammenspiel mit den Abmessungen der Zungen 15 und den Dicken der jeweiligen Schichten 16 eine Schwingungsdämpfung über einen gewünschten Frequenzbereich.

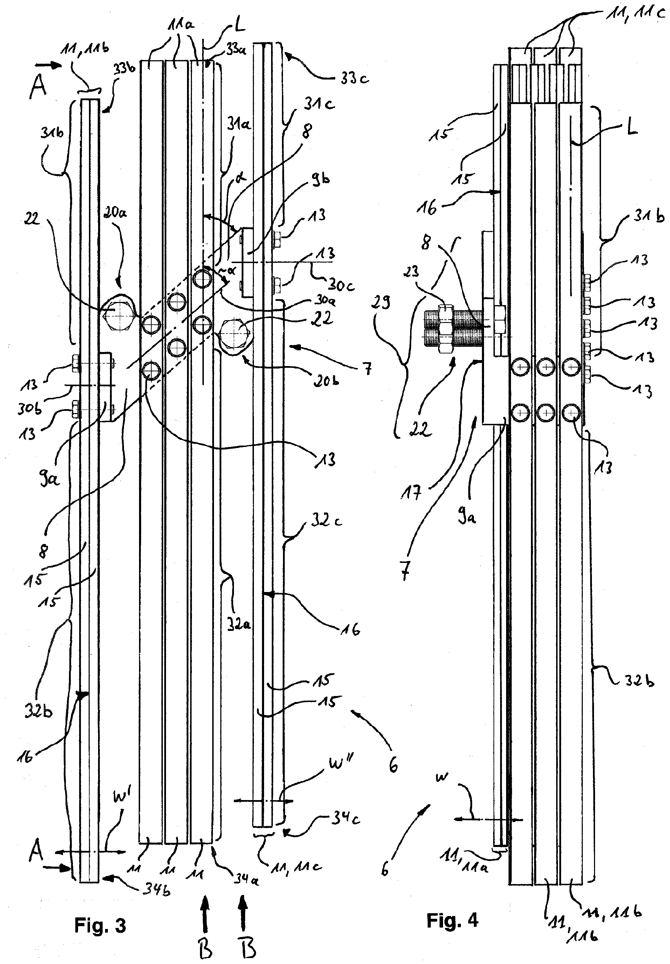

In den Figuren 3-7 ist ein Schwingungsabsorber 6 gemäß einem zweiten Ausführungsbeispiel der Erfindung mit einer Anzahl von Schwingelementen 11 dargestellt. Die stabförmigen Schwingelemente 11 sind bei dem zweiten Ausführungsbeispiel des Schwingungsabsorbers 6 in gleicher Weise ausgebildet wie bei dem ersten Ausführungsbeispiel, so dass auf die obigen Ausführungen hierzu verwiesen werden kann.

Figur 3 zeigt eine Draufsicht auf den Schwingungsabsorber 6 gemäß dem zweiten Ausführungsbeispiel. Gemäß dem zweiten Ausführungsbeispiel weist die Trageanordnung 7 zusätzlich zu einer ersten Trageplatte 8 und einer zweiten Trageplatte 9a, wie bei dem ersten Ausführungsbeispiel, eine dritte Trageplatte 9b auf. Die zweite Trageplatte 9a und die dritte Trageplatte 9b sind mit der ersten Trageplatte 8 derart verbunden, dass die mechanischen Schwingungen von der ersten Trageplatte 8 auf die zweite Trageplatte 9a und auch auf die dritte Trageplatte 9b übertragen werden können. Auch bei dem zweiten Ausführungsbeispiel sind die Trageplatten 8, 9a und 9b vorzugsweise einstückig miteinander ausgebildet. Während, wie bei dem ersten Ausführungsbeispiel, erste Schwingelemente 11a mit der ersten Trageplatte 8 und zweite Schwingelemente 11b mit der zweiten Trageplatte 9a gekoppelt ist, ist zusätzlich wenigstens ein drittes Schwingelement 11c an einer dritten Position 30c entlang der Längsachse L des dritten Schwingelements 11c mit der dritten Trageplatte 9b für eine zuverlässige Übertragung mechanischer Schwingungen gekoppelt. Bei dem gezeigten Ausführungsbeispiel sind beispielhaft drei dritte Schwingelemente 11c dargestellt. Auch bei dem Ausführungbeispiel gemäß Figur 3 erfolgt die Kopplung der Schwingelemente 11 mit den Trageplatten 8, 9a, 9b kraft- und momentenschlüssig mit Hilfe von Schrauben 13, wie bereits beschrieben. Die Längsachsen L der Schwingelemente 11 sind auch bei dem zweiten Ausführungsbeispiel im Wesentlichen parallel zueinander.

Wie aus den Figuren 3-7 ersichtlich ist, ist die zweite Trageplatte 9a im Wesentlichen senkrecht zu der ersten Trageplatte 8 angeordnet. Zusätzlich sind die erste Trageplatte 8 und die dritte Trageplatte 9b ebenfalls im Wesentlichen senkrecht zueinander angeordnet. Die Schwingelemente 11 weisen gemäß dem Ausführungsbeispiel der Figur 3 alle im Wesentlichen die gleiche Länge auf, wobei auch Schwingelemente 11 unterschiedlicher Längen eingesetzt werden können. Während sich die erste Trageplatte 8 bei dem Ausführungsbeispiel der Figur 3 zu der Längsrichtung L der Schwingelemente 11 in einem Winkel α von weniger als 90°, beispielsweise von etwa 45° geneigt, erstreckt, sind auch die Schrauben 13, mittels welcher die mit der ersten Trageplatte 8 gekoppelten Schwingelemente 11a kraft- und momentenschlüssig an der ersten Trageplatte 8 befestigt sind, ebenfalls entlang einer Richtung, welche zu der Längsrichtung L um einen Winkel α von weniger als 90°, insbesondere von etwa 45°, geneigt ist, versetzt angeordnet. Dadurch bilden die nebeneinander liegenden Schwingelemente 11a, welche mit der ersten Trageplatte 8 gekoppelt sind, Balkenelemente 31a, 32a unterschiedlicher, in einem bestimmten Verhältnis abgestufter Längen aus, wodurch eine Schwingungsabsorption in einem breiteren Frequenzbereich möglich wird.

Wie Figur 3 weiter zeigt, ist die erste Trageplatte 8 im Bereich zweier Endabschnitte 20a, 20b, welche bei dem zweiten Ausführungsbeispiel der Erfindung laschenartig ausgebildet sind, mit Bohrungen versehen, welche der Aufnahme der Befestigungsschrauben 22 für ein kraft- und momentenschlüssiges Befestigen der Trageanordnung 7 an dem Bauwerk 1 dienen, versehen.

Figur 4 zeigt eine Seitenansicht des Schwingungsabsorbers 6 gemäß dem zweiten Ausführungsbeispiel. Wie Figur 4 zeigt, sind die mit der zweiten Trageplatte 9a und der dritten Trageplatte 9b gekoppelten Schwingelemente 11b bzw. 11c jeweils derart mit der zugehörigen Trageplatte gekoppelt, dass nebeneinander liegend angeordnete Schwingelemente 11 Balkenelemente 31a-c, 32a-c gleicher Länge ausbilden.

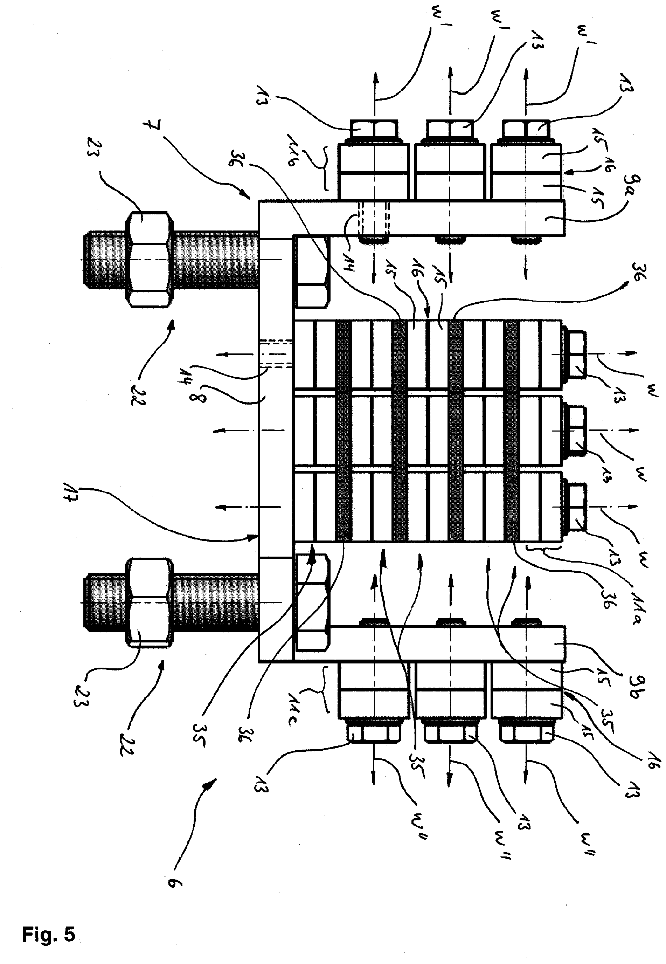

Figur 5 zeigt den Schwingungsabsorber 6 gemäß dem zweiten Ausführungsbeispiel in einer Stirnansicht, betrachtet in Richtung B-B (Figur 3). Es wird ersichtlich, dass die erste Trageplatte 8, die zweite Trageplatte 9a und die dritte Trageplatte 9b zueinander, aus dieser Richtung betrachtet, in U-Form angeordnet sind, wobei die zweite Trageplatte 9a und die dritte Trageplatte 9b von der ersten Trageplatte 8 zu der gleichen Seite hin abstehen. Weiterhin zeigt Figur 5, dass bei diesem Ausführungsbeispiel die mit den zweiten und dritten Trageplatten 9a, 9b gekoppelten Schwingelemente 11b bzw. 11c auf den von dem Innenraum des U abgewandten Seitenflächen der zweiten beziehungsweise dritten Trageplatten 9a, 9b angeordnet sind. Die mit der zweiten Trageplatte 9a gekoppelten zweiten Schwingelemente 11b sind nebeneinander angeordnet. Gleiches gilt für die mit der dritten Trageplatte 9b gekoppelten dritten Schwingelemente 11c. Bei dem gezeigten zweiten Ausführungsbeispiel sind mit der ersten Trageplatte 8 ebenfalls mehrere erste Schwingelemente 11a gekoppelt. Diese sind entlang einer Richtung senkrecht zu der Trageplatte 8 in mehreren Schichten 35 übereinander angeordnet. Je Schicht 35 sind bei dem gezeigten Ausführungsbeispiel drei Schwingelemente 11a nebeneinander angeordnet. Um zu gewährleisten, dass die freien Enden 33a, 34a der Schwingelemente 11a ungehindert frei schwingen können, sind zwischen den in mehreren Schichten 35 übereinander angeordneten Schwingelementen 11a Distanzplatten 36 vorgesehen. Mittels der Schrauben 13 sind die Schwingelemente 11a mit den Distanzplatten 36 gegen die erste Trageplatte 8 gespannt, um eine zuverlässige Übertragung der Schwingungen von der ersten Trageplatte 8 auf die Schwingelemente 11a zu gewährleisten. Der Übersicht halber sind nur einige der Schwingelemente mit Bezugszeichen versehen.

Darüber hinaus ist aus Figur 5 ersichtlich, dass die erste Trageplatte 8 wiederum eine erste ebene Anlagefläche 17 aufweist. Bei der Befestigung des Schwingungsabsorbers 6 gemäß dem zweiten Ausführungsbeispiel an dem Bauwerk 1 liegt die erste Anlagefläche 17 an einer Oberfläche des Bauwerks 1, beispielsweise der Oberfläche des Stegs 4, an. Mittels der Befestigungsschrauben 22 wird die erste Anlagefläche 17 an die Oberfläche des Bauwerks 1 angepresst, um eine gute Übertragung von Schwingungen zu gewährleisten. Bei diesem Ausführungsbeispiel weisen die zweite Trageplatte 9a und die dritte Trageplatte 9b jedoch keine Anlageflächen zur Anlage an dem Bauwerk 1 auf.

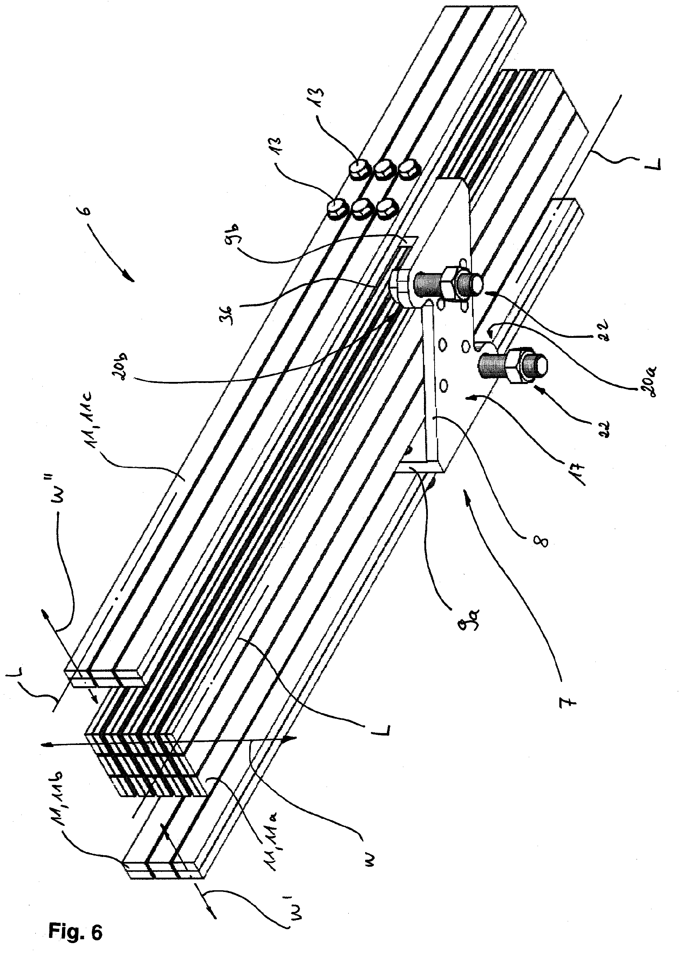

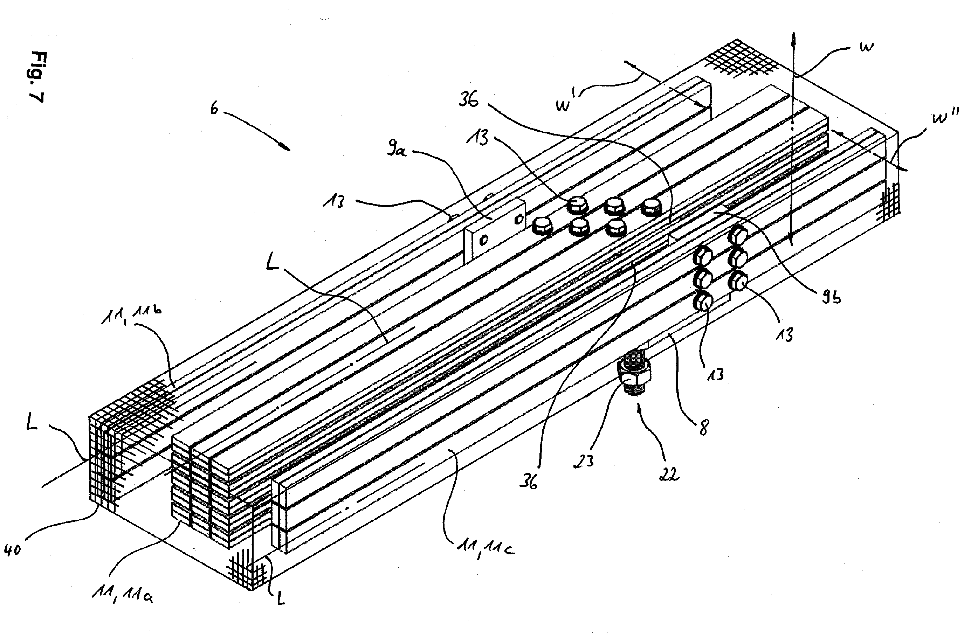

Die Figuren 6 und 7 zeigen zwei perspektivische Darstellungen des Schwingungsabsorbers 6 gemäß dem zweiten Ausführungsbeispiel. Aus den Figuren 6 und 7 wird die besonders günstige, platzsparende Anordnung der Schwingelemente 11, sowie die besonders günstige Zugänglichkeit der Schraubverbindungen deutlich.

Ferner zeigt Figur 7 zusätzlich auch einen optionalen Fangkorb 40, welcher sämtliche Schwingelemente 11 des Schwingungsabsorbers 6 derart umgibt, dass bei einem - wenngleich sehr unwahrscheinlichen - Bruch einer oder mehreren der Schrauben 13 ein sich dadurch von der Trageanordnung 7 lösendes Schwingelement 11 sicher aufgefangen wird. Der Fangkorb 40 umgreift den Schwingungsabsorber 6 vorzugsweise abschnittsweise formschlüssig. Wie in Figur 7 angedeutet, weist der Fangkorb 40 hier eine Drahtgitterstruktur auf, wodurch auch eine problemlose visuelle Inspektion des Schwingungsabsorbers 6 ermöglicht wird. Wenngleich der Fangkorb 40 hier lediglich in Bezug auf das zweite Ausführungsbeispiel zeichnerisch dargestellt ist, kann er mit geeigneter Formgebung und Bemessung auch bei den Schwingungsabsorbern 6 gemäß dem ersten oder dem nachstehend noch beschriebenen dritten Ausführungsbeispiel der Erfindung zum Einsatz kommen.

Figur 9 zeigt eine Stirnansicht eines Schwingungsabsorbers 6 gemäß einem dritten Ausführungsbeispiel der Erfindung, welcher ebenfalls Schwingelemente 11, 11a-c aufweist. Der Schwingungsabsorber 6 gemäß dem dritten Ausführungsbeispiel stellt eine Abwandlung des zweiten Ausführungsbeispiels dar.

Bei dem dritten Ausführungsbeispiel sind eine zweite Trageplatte 9a und eine dritte Trageplatte 9b miteinander mittels einer im Wesentlichen senkrecht zu der zweiten Trageplatte 9a und der dritten Trageplatte 9b angeordneten, ebenen Verbindungsplatte 37 in Eckbereichen 38 einstückig verbunden. Mit anderen Worten bilden die zweite Trageplatte 9a, die Verbindungsplatte 37 und die dritte Trageplatte 9b ebenfalls eine U-förmige Querschnittsform aus. Eine erste Trageplatte 8, welche wiederum eine erste ebene Anlagefläche 17 für ein Anliegen an einer Oberfläche eines Bauwerks 1, beispielsweise an einer Oberfläche eines Querträgers 3 einer Eisenbahnbrücke, aufweist, ist bei dem dritten Ausführungsbeispiel mit den zweiten und dritten Trageplatten 9a, 9b nicht einstückig verbunden. Die erste Trageplatte 8 ist im Wesentlichen eben ausgebildet und schließt die von den Trageplatten 9a, 9b und der Verbindungsplatte 37 gebildete U-Form an ihrer verbleibenden offenen Seite ab. Anders betrachtet verbindet die Verbindungsplatte 37 die zweite Trageplatte 9a und die dritte Trageplatte 9b im Bereich einer offenen Seite der durch die ersten, zweiten und dritten Trageplatten 8, 9a, 9b gebildeten U-Form.

Auch bei dem Schwingungsabsorber 6 der Figur 9 kann sich die erste Trageplatte 8 zu der Längsrichtung L der Schwingelemente 11 in einem Winkel α von weniger als 90°, beispielsweise von etwa 45° geneigt, erstrecken. Die Verbindungsplatte 37 kann sich zu der ersten Trageplatte 8 im Wesentlichen parallel und ebenfalls zu der Längsachse L um den Winkel α geneigt erstrecken.

Die Schwingelemente 11, 11a-c, sind bei dem in Figur 9 gezeigten Schwingungsabsorber 6 in gleicher Weise, wie bereits zu den ersten beiden Ausführungsbeispielen beschrieben, ausgebildet, so dass auf die entsprechenden vorstehenden Ausführungen verwiesen wird. Auch bei dem Ausführungsbeispiel gemäß Figur 9 können (hier nicht dargestellte) Distanzplatten 36 vorgesehen sein, um ein freies Schwingen von in Schichten übereinander angeordneten Schwingelementen 11 - hier beispielhaft den ersten Schwingelementen 11a - sicherzustellen. Die Befestigung der Schwingelemente 11, 11a-c erfolgt auch bei dem dritten Ausführungsbeispiel mittels Schraubverbindungen 13, welche in Figur 9 jedoch der Übersicht halber nicht im Detail gezeigt sind. Gemäß Figur 9 sind die Schwingelemente 11b, 11c nebeneinander auf den zum Inneren der U-Form weisenden Flächen der zweiten Trageplatte 9a und der dritten Trageplatte 9b angeordnet. Wie aus Figur 9 erkennbar ist, werden die Schwingelemente 11 somit von der mit der ersten Trageplatte 8, den zweiten und dritten Trageplatten 9a und 9b sowie der Verbindungsplatte 37 gebildeten Trageanordnung quer zur Längsrichtung L der Schwingelemente 11 umschlossen.

Bei dem Schwingungsabsorber 6 der Figur 9 erfolgt die Verbindung der ersten Trageplatte 8 mit den zweiten und dritten Trageplatten 9a, 9b mittels einer kraft- und momentenschlüssigen Schraubverbindung. Zu diesem Zweck sind zwei seitliche Laschen 39a, 39b vorgesehen, welche jeweils vorzugsweise etwa senkrecht seitlich nach außen von der zweiten Trageplatte 9a bzw. der dritten Trageplatte 9b abstehend angeordnet sind. Die seitlichen Laschen 39a, 39b weisen jeweils eine im Wesentlichen ebene untere Oberfläche 41 auf.

Zum Montieren des Schwingungsabsorbers 6 gemäß Figur 9 werden zunächst eine Anzahl von Befestigungsbohrungen in den Teil des Bauwerks 1, an dem der Schwingungsabsorber 6 befestigt werden soll, eingebracht. Bei dem gezeigten Beispiel wird der Steg 4 des Querträgers 3 mit Befestigungsbohrungen versehen. Sodann werden von einer Seite des Steges 4 kommend Befestigungsschrauben 22 durch die Bohrungen gesteckt und, von der anderen Seite des Steges 4 her, die erste Trageplatte 8, welche in Endabschnitten 20a, 20b ebenfalls geeignete Bohrungen 21 zur Aufnahme der Befestigungsschrauben 22 aufweist, mit der ersten Anlagefläche 17 auf die Oberfläche des Steges 4 aufgesetzt. Dabei treten die Befestigungsschrauben 22 durch die zugeordneten Bohrungen 21 in den Endabschnitten 20a und 20b. Sodann werden in einem zweiten Schritt die einstückig miteinander und mit der Verbindungsplatte 37 verbundenen Trageplatten 9a, 9b zusammen mit den damit gekoppelten Schwingelementen 11b, 11c aufgesetzt. Hierbei kommen die unteren Oberflächen 41 der Laschen 39a, 39b jeweils im Bereich der Endabschnitte 20a, 20b zur Anlage an eine obere Oberfläche 42 der ersten Trageplatte 8. Die seitlichen Laschen 39a, 39b weisen ebenfalls Bohrungen auf, durch welche die Befestigungsschrauben 22 geführt werden. Mit Hilfe von Befestigungsmuttern 23 wird schließlich eine kraft- und momentenschlüssige Verbindung der ersten Trageplatte 8 mit den zweiten und dritten Trageplatten 9a, 9b hergestellt und zugleich eine kraft- und momentenschlüssige Verbindung des Schwingungsabsorbers 6 mit dem Steg 4 und ein Anpressen der ersten Anlagefläche 17 an diesen für eine gute Übertragung mechanischer Schwingungen erzielt.

Der Schwingungsabsorber 6 gemäß Figur 9 ermöglicht durch die zweiteilige Ausbildung der Trageanordnung 7 vorteilhaft ein Montieren durch eine einzige Person auch dann, wenn der Schwingungsabsorber 6 insgesamt, zum Beispiel wegen einer großen Zahl erforderlicher Schwingelemente 11, ein hohes Gewicht aufweist. Auch wenn der Steg 4 bei dem Bauwerk 1 senkrecht verläuft, kann die Trageplatte 8 mit den ersten Schwingelementen 11a zunächst auf die durchgesteckten Befestigungsschrauben 22 eingehängt werden. Erst in einem zweiten Schritt wird dann, wie beschrieben, der zweite Teil der Trageanordnung 7 mit den restlichen Schwingelementen 11b, 11c aufgesetzt. Die Masse des Schwingungsabsorbers 6 wird somit in zwei noch besser handhabbare Teile geringeren Gewichts aufgeteilt.

Ferner zeigen die Figuren 1 bis 7 sowie 9 zur Verdeutlichung für alle drei beschriebenen Ausführungsbeispiele die Hauptwirkungsrichtungen W, W', W" der ersten, zweiten bzw. dritten Schwingelemente 11a, 11b bzw. 11c. Es wird ersichtlich, dass die Schwingungsabsorber 6 gemäß dem ersten, dem zweiten und dem dritten Ausführungsbeispiel der Erfindung eine Dämpfung von Schwingungen entlang zweier senkrecht zueinander stehender Raumrichtungen ermöglichen.

Bei den beiden gezeigten Ausführungsbeispielen gemäß den vorbeschriebenen Figuren 1-7 und 9 sind die Zungen 15 der Schwingelemente 11 vorzugsweise aus Metall gefertigt. Die Trageplatten 8, 9 (oder 9') beziehungsweise 8, 9a, 9b sind ebenfalls vorzugsweise aus einem metallischen Werkstoff hergestellt und bei dem ersten und zweiten Ausführungsbeispiel bevorzugt einstückig miteinander ausgebildet. Beim dritten Ausführungsbeispiel sind die zweiten und dritten Trageplatten 9a, 9b und die Verbindungsplatte 37 vorzugsweise miteinander und zusammen mit den seitlichen Laschen 39a, 39b einstückig ausgebildet. Hierdurch kann eine hohe mechanische Belastbarkeit und eine gute Lebensdauer sichergestellt werden. Bevorzugt sind die metallischen Bauelemente des Schwingungsabsorbers gemäß dem ersten, dem zweiten beziehungsweise dem dritten Ausführungsbeispiel ferner an ihrer Oberfläche galvanisch beschichtet, um eine verbesserte Beständigkeit gegenüber Umwelteinflüssen zu gewährleisten.

Der Schwingungsabsorber 6 gemäß dem ersten, zweiten und dritten Ausführungsbeispiel weist Schwingelemente 11 auf, welche insbesondere eine wirksame Absorption niederfrequenter Schwingungen in einem Frequenzbereich von etwa 10 Hz bis etwa 200 Hz ermöglichen. Zwischen den Zungen 15 ist bei allen Ausführungsbeispielen eine dämpfende Schicht 16 vorgesehen, wobei das diese Schicht 16 bildende Dämpfungsmaterial vorzugsweise gegen Ozon und UV-Strahlung beständig ist und Temperaturen insbesondere in einem Bereich von -20°C bis 80°C ohne Schaden übersteht.

Insbesondere ist es denkbar, die Befestigungseinrichtung zum Befestigen des Schwingungsabsorbers derart auszubilden, dass die Trageanordnung durch Schweißen mit einem Abschnitt des Bauwerks verbunden werden kann.

### Bezugszeichenliste

- 1: Bauwerk
- 2: Längsträger
- 3: Querträger
- 4: Steg
- 5: Flansch
- 6: Schwingungsabsorber
- 7: Trageanordnung
- 8: erste Trageplatte
- 9,9a: zweite Trageplatte
- 9': zweite Trageplatte (Variante)
- 9b: dritte Trageplatte
- 10: Eckbereich
- 11: Schwingelement
- 11a: erstes Schwingelement
- 11b: zweites Schwingelement
- 11c: drittes Schwingelement
- 12: Schraubverbindung
- 13: Schraube
- 14: Gewindebohrung
- 15: Zunge
- 16: Schicht (Dämpfungsmaterial)
- 17: erste Anlagefläche
- 18: zweite Anlagefläche
- 19: Endabschnitt (erste Trageplatte)
- 20a,b: Endabschnitt (erste Trageplatte)
- 21: Bohrung
- 22: Befestigungsschraube
- 23: Befestigungsmutter
- 24: Zugstange
- 25: Klammerelement
- 26: Nut
- 27: Abschnitt
- 28: Vorsprung
- 29: Befestigungseinrichtung
- 30a: erste Position
- 30b: zweite Position
- 30b': zweite Position (Variante)
- 30c: dritte Position
- 31a-c: Balkenelement
- 32a-c: Balkenelement
- 33a-c: freies Ende
- 34a-c: freies Ende
- 35: Schicht (Schwingelemente)
- 36: Distanzplatte
- 37: Verbindungsplatte
- 38: Eckbereich
- 39a,b: seitliche Lasche
- 40: Fangkorb
- 41: untere Oberfläche (seitliche Lasche)
- 42: obere Oberfläche (erste Trageplatte)

- V: vertikale Richtung
- H: horizontale Richtung
- L: Längsachse (Schwingelement)
- LZ: Längsachse (Zugstange)
- W, W', W": Hauptwirkungsrichtung

- α: Winkel

## Patentansprüche

1. Schwingungsabsorber (6) zur Dämpfung mechanischer Schwingungen eines wenigstens abschnittsweise schwingfähigen Bauwerks (1), mit
zumindest zwei stabförmigen Schwingelementen (11) mit jeweils einer Längsachse (L) und
einer Trageanordnung (7), welche zumindest zwei nichtparallele Trageplatten (8, 9; 8, 9a, 9b) und eine Befestigungseinrichtung (29) aufweist, wobei
die Befestigungseinrichtung (29) für ein Befestigen des Schwingungsabsorbers (6) an dem Bauwerk (1) derart ausgebildet ist, dass mechanische Schwingungen des Bauwerks (1) in zumindest eine erste (8) der Trageplatten einleitbar sind;
die Trageplatten (8, 9; 8, 9a, 9b) derart miteinander verbunden sind, dass die mechanischen Schwingungen von der ersten Trageplatte (8) auf eine zweite (9; 9a) der Trageplatten übertragbar sind; und
ein erstes Schwingelement (11a) an einer ersten Position (30a) entlang der Längsachse (L) des ersten Schwingelements (11a) mit der ersten Trageplatte (8) und ein zweites Schwingelement (11b) an einer zweiten Position (30b) entlang der Längsachse (L) des zweiten Schwingelements (11b) mit der zweiten Trageplatte (9; 9a) für eine Übertragung der mechanischen Schwingungen von der ersten Trageplatte (8) auf das erste Schwingelement (11a) und von der zweiten Trageplatte (9; 9a) auf das zweite Schwingelement (11b) gekoppelt sind; Veit, Günther
wobei die Befestigungseinrichtung (29) eine an der ersten Trageplatte (8) vorgesehene erste ebene Anlagefläche (17) und ein oder mehrere Bohrungen (21) in einem Endabschnitt (19) oder mehreren Endabschnitten (20a, 20b) der ersten Trageplatte (8) umfasst, wobei die erste ebene Anlagefläche (17) derart gestaltet ist, dass sie im an dem Bauwerk befestigten Zustand, an einem Steg (4) eines Querträgers (3) des Bauwerks (1) im Wesentlichen vollflächig anliegt, wobei die Bohrungen (21) zum Aufnehmen von Befestigungsschrauben (22) für ein kraft- und momentenschlüssiges Befestigen der Trageanordnung (7) durch ein Anliegen der ersten ebenen Anlagefläche (17) an dem Bauwerk (1) ausgebildet sind.

2. Schwingungsabsorber nach Anspruch 1, **dadurch gekennzeichnet, dass** die erste (8) und die zweite (9; 9a) Trageplatte im Wesentlichen senkrecht zueinander angeordnet sind.

3. Schwingungsabsorber nach Anspruch 1 oder 2, **dadurch gekennzeichnet, dass** die Trageanordnung (7) eine dritte Trageplatte (9b) aufweist, welche mit der ersten Trageplatte (8) derart verbunden ist, dass die mechanischen Schwingungen von der ersten Trageplatte (8) auch auf die dritte Trageplatte (9b) übertragbar sind, wobei ein drittes Schwingelement (11c) an einer dritten Position (30c) entlang der Längsachse (L) des dritten Schwingelements (11c) für eine Übertragung der mechanischen Schwingungen von der dritten Trageplatte (9b) auf das dritte Schwingelement (11c) gekoppelt ist.

4. Schwingungsabsorber nach Anspruch 3, **dadurch gekennzeichnet, dass** die erste (8) und die dritte (9b) Trageplatte im Wesentlichen senkrecht zueinander angeordnet sind.

5. Schwingungsabsorber nach Anspruch 3 oder 4, **dadurch gekennzeichnet, dass** die erste (8), zweite (9a) und dritte (9b) Trageplatte zueinander in U-Form angeordnet sind, wobei die zweite (9a) und dritte (9b) Trageplatte zu der gleichen Seite von der ersten Trageplatte (8) abstehen.

6. Schwingungsabsorber nach Anspruch 5, **dadurch gekennzeichnet, dass** die zweite (9a) und die dritte (9b) Trageplatte miteinander im Bereich einer offenen Seite der U-Form über eine Verbindungsplatte (37) verbunden sind.

7. Schwingungsabsorber nach einem der vorstehenden Ansprüche, **dadurch gekennzeichnet, dass** die Kopplung der Schwingelemente (11) mit den Trageplatten (8, 9; 8, 9a, 9b) jeweils als kraft- und momentenschlüssige Schraubverbindung (12), insbesondere jeweils mittels zweier Schrauben (13), ausgebildet ist.

8. Schwingungsabsorber nach einem der vorstehenden Ansprüche, **dadurch gekennzeichnet, dass** die Schwingelemente (11) in Bezug auf die Trageplatten (8, 9; 8, 9a, 9b) derart angeordnet sind, dass eine Hauptwirkungsrichtung (W, W'; W, W', W") jedes der Schwingelemente (11) jeweils im Wesentlichen senkrecht zu der Trageplatte (8, 9; 8, 9a, 9b), mit welcher dieses Schwingelement (11) gekoppelt ist, verläuft.

9. Schwingungsabsorber nach einem der vorstehenden Ansprüche, **dadurch gekennzeichnet, dass** die Position (30a,b; 30a-c) der Kopplung der Schwingelemente (11) mit den Trageplatten (8, 9; 8, 9a, 9b) jeweils derart gewählt ist, dass jedes Schwingelement (11) zwei frei schwingende, einseitig eingespannte Balkenelemente (31a,b, 32a,b; 31a-c, 32a-c) bildet.

10. Schwingungsabsorber nach einem der vorstehenden Ansprüche, **dadurch gekennzeichnet, dass** mit zumindest einer der Trageplatten (8, 9; 8, 9a, 9b) mehrere Schwingelemente (11) gekoppelt sind.

11. Schwingungsabsorber nach Anspruch 10, **dadurch gekennzeichnet, dass** die mehreren Schwingelemente (11) auf der zumindest einen der Trageplatten (8, 9; 9a, 9b) nebeneinander angeordnet sind.

12. Schwingungsabsorber nach Anspruch 10 oder 11, **dadurch gekennzeichnet, dass** die mehreren Schwingelemente (11) entlang einer Richtung senkrecht zu der zumindest einen Trageplatte (8, 9; 9a, 9b) in mehreren Schichten (35) übereinander angeordnet sind und mit zwischen den Schwingelementen (11) angeordneten Distanzplatten (36) in Berührung stehen.

13. Schwingungsabsorber nach einem der vorstehenden Ansprüche, **dadurch gekennzeichnet, dass** die Schwingelemente (11) jeweils mit zwei im Wesentlichen parallel zueinander angeordneten Zungen (15) gleicher Abmessungen gebildet sind, wobei zwischen den Zungen (15) eine Schicht (16) eines Dämpfungsmaterials, insbesondere eines dauerelastischen Werkstoffes, angeordnet ist.

14. Schwingungsabsorber nach einem der vorstehenden Ansprüche, **dadurch gekennzeichnet, dass** die Befestigungseinrichtung (29) eine an der zweiten Trageplatte (9) vorgesehene zweite ebene Anlagefläche (18) umfasst, welche für ein Anliegen an dem Bauwerk (1) vorgesehen ist.

15. Schwingungsabsorber nach einem der vorstehenden Ansprüche, **dadurch gekennzeichnet, dass** die Befestigungseinrichtung (29) eine Zugstange (24) sowie ein Klammerelement (25) aufweist, wobei das Klammerelement (25) zum zumindest teilweisen Hintergreifen eines Abschnitts (27) des Bauwerkes (1) ausgebildet ist und die Zugstange (24) mit der zweiten Trageplatte (9) und dem Klammerelement (25) derart koppelbar ist, dass eine Zugkraft auf die Zugstange (24) aufbringbar und die Trageanordnung (7) hierdurch gegen den Abschnitt (27) des Bauwerkes (1) klemmbar ist.

16. Schwingungsabsorber nach Anspruch 15, **dadurch gekennzeichnet, dass** eine Längsachse (LZ) der Zugstange (24) im Wesentlichen senkrecht zu der ersten Trageplatte (8) verläuft.

## Claims

1. Vibration absorber (6) for the damping of mechanical vibrations of a structure (1) of which at least portions are capable of vibration, with
at least two rod-shaped vibrating elements (11) each with a longitudinal axis (L) and
a support arrangement (7) which has at least two non-parallel support plates (8, 9; 8, 9a, 9b) and a fastening device (29), wherein
the fastening device (29) is provided for fastening the vibration absorber (6) to the structure (1) such that mechanical vibrations of the structure (1) can be led into at least a first (8) of the support plates;
the support plates (8, 9; 8, 9a, 9b) are interconnected such that the mechanical vibrations can be transferred from the first support plate (8) to a second (9; 9a) of the support plates; and
a first vibrating element (11a) at a first position (30a) along the longitudinal axis (L) of the first vibrating element (11a) is coupled with the first support plate (8) and a second vibrating element (11b) at a second position (30b) along the longitudinal axis (L) of the second vibrating element (11b) is coupled with the second support plate (9; 9a) for the transfer of the mechanical vibrations from the first support plate (8) to the first vibrating element (11a) and from the second support plate (9; 9a) to the second vibrating element (11b) ;
wherein the fastening device (29) encloses a first flat contact surface (17) provided on the first support plate (8) and one or more boreholes (21) in an end portion (19), or a plurality of end portions (20a, 20b), of the first support plate (8), wherein the first flat contact surface (17) is structured such that in the state fastened to the structure said first flat contact surface (17) with its full surface is substantially in contact with a web (4) of a crossbeam (3) of the structure (1), wherein the boreholes (21) are provided for receiving fastening screws (22) for a friction-locked and torque-locked fastening of the support arrangement (7) by means of contact between the first flat contact surface (17) and the structure (1).

2. Vibration absorber according to claim 1, **characterised in that** the first (8) and the second (9; 9a) support plates are arranged substantially perpendicular to one another.

3. Vibration absorber according to claim 1 or claim 2, **characterised in that** the support arrangement (7) has a third support plate (9b) which is connected to the first support plate (8) such that the mechanical vibrations can be transferred from the first support plate (8) also to the third support plate (9b), wherein a third vibrating element (11c) at a third position (30c) along the longitudinal axis (L) of the third vibrating element (11c) is coupled for a transference of the mechanical vibrations from the third support plate (9b) to the third vibrating element (11c).

4. Vibration absorber according to claim 3, **characterised in that** the first (8) and the third (9b) support plates are arranged substantially perpendicular to one another.

5. Vibration absorber according to claim 3 or claim 4, **characterised in that** the first (8), second (9a) and third (9b) support plates are arranged in a U-shape in respect of one another, wherein the
second (9a) and third (9b) support plates project from the identical face of the first support plate (8).

6. Vibration absorber according to claim 5, **characterised in that** the second (9a) and the third (9b) support plates are interconnected in the region of an open face of the U-shape by means of a connection plate (37).

7. Vibration absorber according to any one of the preceding claims, **characterised in that** the coupling of the vibrating elements (11) to the support plates (8, 9; 8, 9a, 9b) respectively is provided as a friction-locked and torque-locked screwed connection (12), in particular by means of two screws (13) respectively.

8. Vibration absorber according to any one of the preceding claims, **characterised in that** the vibrating elements (11) are arranged in relation to the support plates (8, 9; 8, 9a, 9b) such that a main direction of action (W, W'; W, W', W") of each of the vibrating elements (11) is aligned respectively substantially perpendicular to the support plate (8, 9; 8, 9a, 9b) to which this vibrating element (11) is coupled.

9. Vibration absorber according to any one of the preceding claims, **characterised in that** the position (30a, 30b; 30a-c) of the coupling of the vibrating elements (11) to the support plates (8, 9; 8, 9a, 9b) is selected respectively such that each vibrating element (11) forms two freely vibrating, unilaterally clamped bar elements (31a, 31b, 32a, 32b; 31a-c, 32a-c).

10. Vibration absorber according to any one of the preceding claims, **characterised in that** a plurality of vibrating elements (11) are coupled to at least one of the support plates (8, 9; 8, 9a, 9b).

11. Vibration absorber according to claim 10, **characterised in that** the multiple vibrating elements (11) are arranged adjacent to one another on the at least one of the support plates (8, 9; 9a, 9b).

12. Vibration absorber according to claim 10 or claim 11, **characterised in that** the multiple vibrating elements (11) are superimposed on one another in a plurality of layers (35) along a direction perpendicular to the at least one support plate (8, 9; 9a, 9b) and are in contact with spacer plates (36) arranged between the vibrating elements (11).

13. Vibration absorber according to any one of the preceding claims, **characterised in that** the vibrating elements (11) are formed respectively with two mutually substantially parallel tongues (15) of identical dimensions, wherein between the tongues (15) a layer (16) of a damping material is arranged, in particular of a permanently elastic material.

14. Vibration absorber according to any one of the preceding claims, **characterised in that** the fastening device (29) encloses a second flat contact surface (18) provided on the second support plate (9), said second flat contact surface (18) being provided for abutting against the structure (1).

15. Vibration absorber according to any one of the preceding claims, **characterised in that** the fastening device (29) has a tension bar (24) and a clamping element (25), wherein the clamping element (25) is provided for the at least partial gripping behind of a portion (27) of the structure (1), and the tension bar (24) can be coupled to the second support plate (9) and the clamping element (25) in such a way that a tensile force can be applied to the tension bar (24) and the support arrangement (7) can be clamped by this means to the portion (27) of the structure (1).

16. Vibration absorber according to claim 15, **characterised in that** a longitudinal axis (LZ) of the tension bar (24) is aligned substantially perpendicular to the first support plate (8).

## Revendications

1. Absorbeur de vibrations (6) destiné à amortir des vibrations mécaniques d'un ouvrage (1) capable de vibrer au moins par sections, comprenant :
au moins deux éléments vibrants en forme de bâtons (11) avec chacun un axe longitudinal (L) et
un agencement de support (7), qui présente au moins deux plaques de support non parallèles (8, 9 ; 8, 9a, 9b) et un moyen de fixation (29),
dans lequel :
le moyen de fixation (29) est configuré pour fixer l'absorbeur de vibrations (6) à l'ouvrage (1) de telle sorte que des vibrations mécaniques de l'ouvrage (1) puissent être introduites dans au moins une première (8) des plaques de support ;
les plaques de support (8, 9 ; 8, 9a, 9b) sont reliées les unes aux autres de telle sorte que les vibrations mécaniques puissent être transmises de la première plaque de support (8) à une deuxième (9 ; 9a) des plaques de support ; et
un premier élément vibrant (11a) est couplé, sur une première position (30a) le long de l'axe longitudinal (L) du premier élément vibrant (11a), à la première plaque de support (8) et un deuxième élément vibrant (11b) est couplé, sur une seconde position (30b) le long de l'axe longitudinal (L) du deuxième élément vibrant (11b), à la deuxième plaque de support (9 ; 9a) pour transmettre les vibrations mécaniques de la première plaque de support (8) au premier élément vibrant (11a) et de la deuxième plaque de support (9 ; 9a) au deuxième élément vibrant (11b) ;
dans lequel le moyen de fixation (29) comprend une première surface d'appui plane (17) prévue sur la première plaque de support (8) et un ou plusieurs alesages (21) dans une section d'extrémité (19) ou plusieurs sections d'extrémité (20a, 20b) de la première plaque de support (8), dans lequel la première surface d'appui plane (17) est conçue de telle sorte qu'elle est dans l'état fixé à l'ouvrage, est appliquée sensiblement sur toute la surface sur une traverse (4) d'une support transversal (3) de l'ouvrage (1), dans lequel les alesages (21) sont configurés pour recevoir des vis de fixation (22) afin de fixer par complémentarité de force et de couple l'agencement de support (7) en appliquant la première surface d'appui plane (17) sur l'ouvrage (1).

2. Absorbeur de vibrations selon la revendication 1, **caractérisé en ce que** la première (8) et la deuxième (9 ; 9a) plaque de support sont disposées sensiblement perpendiculairement l'une par rapport à l'autre.

3. Absorbeur de vibrations selon la revendication 1 ou 2, **caractérisé en ce que** l'agencement de support (7) présente une troisième plaque de support (9b) qui est reliée à la première plaque de support (8) de telle sorte que les vibrations mécaniques puissent être transmises de la première plaque de support (8) également à la troisième plaque de support (9b), un troisième élément vibrant (11c) étant couplé, sur une troisième position (30c) le long de l'axe longitudinal (L) du troisième élément vibrant (11c), pour transmettre les vibrations mécaniques de la troisième plaque de support (9b) au troisième élément vibrant (11c).

4. Absorbeur de vibrations selon la revendication 3, **caractérisé en ce que** la première (8) et la troisième (9b) plaque de support sont disposées sensiblement perpendiculairement l'une par rapport à l'autre.

5. Absorbeur de vibrations selon la revendication 3 ou 4, **caractérisé en ce que** la première (8), la deuxième (9a) et la troisième (9b) plaque de support sont disposées les unes par rapport aux autres selon une forme en U, la deuxième (9a) et la troisième (9b) plaque de support dépassant du même côté par rapport à la première plaque de support (8).

6. Absorbeur de vibrations selon la revendication 5, **caractérisé en ce que** la deuxième (9a) et la troisième (9b) plaque de support sont reliées les unes aux autres au niveau d'un côté ouvert de la forme en U par le biais d'une plaque de liaison (37).

7. Absorbeur de vibrations selon une des revendications précédentes, **caractérisé en ce que** l'accouplement des éléments vibrants (11) avec les plaques de support (8, 9 ; 8, 9a, 9b) est réalisé respectivement sous la forme d'une liaison vissée (12) par complémentarité de force et de couple, en particulier respectivement à l'aide de deux vis (13).

8. Absorbeur de vibrations selon une des revendications précédentes, **caractérisé en ce que** les élément vibrants (11) sont disposés par rapport aux plaques de support (8, 9 ; 8, 9a, 9b) de telle sorte qu'une direction d'action principale (W, W' ; W, W', W") de chacun des éléments vibrants (11) s'étend respectivement sensiblement perpendiculairement à la plaque de support (8, 9 ; 8, 9a, 9b) avec laquelle est couplé cet élément vibrant (11).

9. Absorbeur de vibrations selon une des revendications précédentes, **caractérisé en ce que** la position (30a,b ; 30a-c) de l'accouplement des éléments vibrants (11) avec les plaques de support (8, 9 ; 8, 9a, 9b) est choisie respectivement de telle sorte chaque élément vibrant (11) forme deux éléments de barres (31a,b, 32a,b ; 31a-c, 32a-c) vibrant librement et tendus d'un seul côté.

10. Absorbeur de vibrations selon une des revendications précédentes, **caractérisé en ce que** plusieurs éléments vibrants (11) sont couplés avec au moins une des plaques de support (8, 9 ; 8, 9a, 9b).

11. Absorbeur de vibrations selon la revendication 10, **caractérisé en ce que** les plusieurs élément vibrants (11) sont disposés les uns à côté des autres sur les au moins une des plaques de support (8, 9 ; 9a, 9b).

12. Absorbeur de vibrations selon la revendication 10 ou 11, **caractérisé en ce que** les plusieurs éléments vibrants (11) sont disposés les uns au-dessus des autres en plusieurs couches (35) le long d'une direction perpendiculairement à l'au moins une des plaques de support (8, 9 ; 9a, 9b) et sont en contact avec des plaques de distance (36) disposées entre les éléments vibrants (11).

13. Absorbeur de vibrations selon une des revendications précédentes, **caractérisé en ce que** les éléments vibrants (11) sont formés chacun avec deux languettes (15) de mêmes dimensions et disposées sensiblement parallèlement les unes par rapport aux autres, dans lequel est disposée, entre les languettes (15), une couche (16) d'un matériau amortisseur, en particulier d'un matériau qui reste élastique dans le temps.

14. Absorbeur de vibrations selon une des revendications précédentes, **caractérisé en ce que** le moyen de fixation (29) comprend une deuxième surface d'appui plane (18) qui est prévue sur la deuxième plaque de support (9) et est prévue pour une application sur l'ouvrage (1).

15. Absorbeur de vibrations selon une des revendications précédentes, **caractérisé en ce que** le moyen de fixation (29) présente une barre de traction (24) ainsi qu'un élément de crochet (25), l'élément de crochet (25) étant configuré pour s'engager au moins partiellement derrière une section (27) de l'ouvrage (1) et la barre de traction (24) pouvant être couplée avec la deuxième plaque de support (9) et l'élément de crochet (25) de telle sorte qu'une force de traction peut être appliquée sur la barre de traction (24) et l'agencement de support (7) peut ainsi être bloqué contre la section (27) de l'ouvrage (1).

16. Absorbeur de vibrations selon la revendication 15, **caractérisé en ce qu'**un axe longitudinal (LZ) de la barre de traction (24) s'étend sensiblement perpendiculairement à la première plaque de support (8).
